# EUROPÄISCHE PATENTANMELDUNG

(11) **EP 4 142 212 A1**
(43) Veröffentlichungstag der Anmeldung: **01.03.2023**
(21) Anmeldenummer: 21192854.4
(22) Anmeldetag: 24.08.2021
(51) Int. Cl.: H04L 9/40

(54) **AUTOMATISIERUNGSSYSTEM MIT MINDESTENS EINER KOMPONENTE MIT MINDESTENS EINER APP UND FERTIGUNGSANLAGE**

(71) Anmelder: Siemens Aktiengesellschaft, 80333 München (DE)
(72) Erfinder: Becker, Stefan, 91325 Adelsdorf (DE); Birk, Gunther, 91054 Erlangen/Buckenhof (DE); Falk, Rainer, 85586 Poing (DE); Fries, Steffen, 85598 Baldham (DE); Greiten, Tobias, 91083 Baiersdorf (DE); Hoch, Maximilian, 91325 Adelsdorf (DE)

(57) **Zusammenfassung**

Das Automatisierungssystem weist mindestens einer Komponente mit mindestens einer App auf, welche jeweils eine mittels eines Containers oder mittels einer virtuellen Maschine lauffähige Anwendung bildet, sowie ein sicheres Gateway auf, wobei die App jeweils über das sichere Gateway mit einem externen Gerät oder Netzwerk kommuniziert, wobei das sichere Gateway eingerichtet ist, Filterregeln für den Kommunikationsverkehr der jeweiligen App vorzuhalten und anhand der Filterregeln für die jeweilige App den Kommunikationsverkehr der jeweiligen App zu filtern.

Die Fertigungsanlage weist ein solches Automatisierungssystem auf.

## Beschreibung

Die Erfindung betrifft ein Automatisierungssystem mit mindestens einer Komponente mit mindestens einer App, welche jeweils eine mittels eines Containers oder mittels einer virtuellen Maschine lauffähige Anwendung bildet, sowie eine Fertigungsanlage.

In industriellen Umgebungen werden Apps unterstützt, damit Anwender flexibel die Funktionalität eines Gerätes oder einer Komponente erweitern oder anpassen können, oder um virtualisierte Steuergeräte zu realisieren. Solche Apps sind regelmäßig mittels jeweils eines Containers oder mittels jeweils einer virtuellen Maschine lauffähige Anwendungen. Solche Apps können auf Komponenten von Automatisierungssystemen, insbesondere auf Industrial-Edge-Geräten von Internet-der-Dinge-Netzwerken oder auf Steuergeräten, insbesondere speicherprogrammierbaren Steuerungen, installiert werden. Die Apps dienen insbesondere zur Bereitstellung von Analysen für eine vorausschauende Wartung, für Analysen zum Stromverbrauch oder zur Erfassung einer Auslastung einer Produktion einer Fertigungsanlage.

Beim Betrieb von Automatisierungssystemen müssen solche Apps regelmäßig über ein Datennetzwerk kommunizieren. Dies birgt grundsätzlich Sicherheitsrisiken.

Es ist daher Aufgabe der Erfindung, ein Automatisierungssystem mit mindestens einer Komponente mit mindestens einer App anzugeben, bei welchem die Sicherheit verbessert ist. Es ist ferner Aufgabe der Erfindung, eine verbesserte Fertigungsanlage anzugeben.

Das erfindungsgemäße Automatisierungssystem weist mindestens eine Komponente mit mindestens einer App und einen sicheren Gateway auf, wobei die App jeweils eine mittels eines Containers oder mittels einer virtuellen Maschine lauffähige Anwendung bildet, und wobei die App jeweils über das sichere Gateway mit einem externen Gerät oder Netzwerk kommunikationsverbindbar und vorzugsweise kommunikationsverbunden ist, wobei das sichere Gateway eingerichtet ist, Filterregeln für den Kommunikationsverkehr der jeweiligen App vorzuhalten und anhand der Filterregeln für die jeweilige App den Kommunikationsverkehr der jeweiligen App zu filtern.

Mittels des sicheren Gateways kann folglich eine Filterung des Kommunikationsverkehrs der jeweiligen App erfolgen, was eine erhöhte Sicherheit des erfindungsgemäßen Automatisierungssystems bedingt. Gemäß dem Stand der Technik können Automatisierungssysteme grundsätzlich Schwachstellen aufweisen, da die Berechtigungen und Privilegien von Apps herkömmlich nicht durch sichere Gateways begrenzt werden, sondern regelmäßig durch Ausführungsumgebungen der jeweiligen App begrenzt werden. Eine solche Begrenzung von Berechtigungen von Apps gemäß dem Stand der Technik eröffnet jedoch Schwachstellen, die durch die Ausführungsumgebung der App bedingt sein können. Bösartige oder manipulierte Apps können aus der Ausführungsumgebung ausbrechen und nicht vorgesehene Prozesse ausführen. Solche nicht vorgesehenen Prozesse können etwa ein Übermitteln von Geschäftsgeheimnissen an ein externes Netzwerk oder externe Geräte oder eine Kommunikation mit Command-and-Control-Servern sein, welche aktive Angriffe auf das Automatisierungssystem aus der Ferne steuern können. Solche Angriffe können auch durch eine herkömmliche Firewall nicht wirksam verhindert werden, da anhand des Netzwerkverkehrs allein nicht unterschieden werden kann, von welcher App die Kommunikation ausgeht. Erfindungsgemäß hingegen ist das sichere Gateway eingerichtet, Filterregeln für den Kommunikationsverkehr der jeweiligen App vorzuhalten und anhand der Filterregeln für die jeweilige App den Kommunikationsverkehr der jeweiligen App zu filtern. Erfindungsgemäß kann also folglich der Kommunikationsverkehr der jeweiligen App abhängig von der jeweiligen App gefiltert werden. So kann etwa eine Datenkommunikation für eine bestimmte App zugelassen sein, für eine andere App jedoch blockiert werden. Filterregeln für die individuellen Apps können bei dem erfindungsgemäßen Automatisierungssystem folglich zusätzliche Parameter abhängig von der individuellen App heranziehen, um den Kommunikationsverkehr abhängig von der jeweiligen App problemangepasst zu filtern. Das Heranziehen der zusätzlichen Parameter erlaubt folglich eine besonders feingranulare Filterung des Kommunikationsverkehrs auf App-Ebene, sodass gleichzeitig Apps mit besonders weitgehenden Befugnissen eingesetzt werden können, ohne dass zugleich die Sicherheit des erfindungsgemäßen Automatisierungssystems deswegen kompromittiert sein muss.

Besonders bevorzugt bildet das erfindungsgemäße Automatisierungssystem ein Automatisierungsnetzwerk und die Komponente bildet bevorzugt eine Netzwerkkomponente des Automatisierungsnetzwerks. Insbesondere bei Netzwerkkomponenten ist der Kommunikationsverkehr mit weiteren Komponenten des Netzwerks komplex. In dieser Weiterbildung der Erfindung ist daher die Filterung des Kommunikationsverkehrs mittels des sicheren Gateways besonders vorteilhaft einsetzbar.

In einer bevorzugten Weiterbildung des erfindungsgemäßen Automatisierungssystems weist dieses ein App-Management-Modul auf, welches eingerichtet ist, die Filterregeln festzulegen. Ein solches App-Management-Modul ist insbesondere eingerichtet, Apps auf einer Komponente zu installieren und/oder zu starten. Zudem kann das App-Management-Modul eingerichtet sein, Komponenten des Automatisierungssystems umzukonfigurieren. Das Umkonfigurieren kann dabei direkt erfolgen oder indirekt über eine oder mehrere Vermittler-Komponenten, insbesondere mittels einer Device-Management-Komponente oder einer Netzwerk-Management-Komponente des Automatisierungsnetzwerks.

In einer bevorzugten Weiterbildung des erfindungsgemäßen Automatisierungssystems ist das App-Management-Modul eingerichtet, die Filterregeln für die jeweilige App anhand einer Information der jeweiligen App, insbesondere anhand einer Metainformation der App, festzulegen. Die Information der jeweiligen App kann in Metadaten der App enthalten sein und insbesondere dynamisch durch die App-Laufzeitumgebung, auch als App-Ausführungsumgebung bezeichnet, ermittelt werden. Vorzugsweise wird die Information abhängig von den API-Aufrufen der App ermittelt. Grundsätzlich kann die Information auch durch einen Verzeichnisdienst, einen Webservice oder eine Distributed-Ledger-Infrastruktur, insbesondere einer Blockchain, bereitgestellt werden.

In einer bevorzugten Weiterbildung des erfindungsgemäßen Automatisierungssystems ist das App-Management-Modul eingerichtet, die Filterregeln für die jeweilige App anhand, d. h. abhängig von, einer Adresse der App und/oder der Komponente, welche die App aufweist, festzulegen. Insbesondere ist die Adresse eine MAC-Adresse und/oder eine IP-Adresse. Anhand von dynamisch von einer App-Ausführungsumgebung oder einem Betriebssystem oder einer Firmware zugeordneten Netzwerkparametern, insbesondere der MAC-Adresse, der IP-Adresse oder einer Port-Nummer der jeweiligen Komponente, auf der die App ausgeführt wird, lässt sich der Kommunikationsverkehr der App leicht filtern. Insbesondere lässt sich anhand solcher leicht auswertbaren Kriterien, nämlich der MAC-Adresse, der IP-Adresse oder der Port-Nummer, leicht feststellen, ob der Kommunikationsverkehr der App legitim ist oder unzulässig ist. Die Filterregeln lassen sich anhand der Adresse der App und/oder der Komponente, insbesondere der MAC-Adresse und/oder anhand der IP-Adresse, spezifisch für die App festlegen.

Vorzugsweise ist bei dem erfindungsgemäßen Automatisierungssystem das App-Management-Modul eingerichtet, die Filterregel anhand, d. h. in Abhängigkeit, eines digitalen Authentisierungs-Zertifikats der App und/oder anhand eines von der App verwendeten Protokolls und/oder anhand eines der App zugeordneten Namens festzulegen. Vorteilhaft lässt sich in dieser Weiterbildung der Erfindung anhand eines Authentisierungs-Zertifikats der App und/oder anhand eines von der App verwendeten Protokolls und/oder anhand eines der App zugeordneten Namens festlegen, welche Berechtigungen die App haben soll oder welche Berechtigungen der App nicht zukommen sollen. Entsprechend lässt sich der Kommunikationsverkehr der App als zulässig oder unzulässig charakterisieren. Entsprechend lassen sich maßgeschneiderte Filterregeln für jede einzelne App anhand der vorgenannten Informationen passgenau festlegen.

Bei dem Automatisierungssystem gemäß der Erfindung ist vorzugsweise das App-Management-Modul eingerichtet, die Filterregeln anhand einer Information der jeweiligen App, insbesondere anhand einer Header-Information eines IP-Pakets des Kommunikationsverkehrs der App, festzulegen. Eine Information des Kommunikationsverkehrs der App, insbesondere eine Header-Information eines IP-Pakets des Kommunikationsverkehrs der App, enthält vorteilhaft charakterisierende, auswertbare, Kriterien für den jeweiligen Kommunikationsverkehr der jeweiligen App. Anhand dieser Informationen lässt sich folglich der Kommunikationsverkehr der App leicht filtern, sodass die Filterregeln diese Information zweckmäßigerweise beinhalten und als Filterkriterium heranziehen.

Idealerweise ist bei dem Automatisierungssystem gemäß der Erfindung das App-Management-Modul eingerichtet, die Filterregeln mittels einer Beobachtung des Kommunikationsverkehrs von bereits als zuverlässig erkannten Apps festzulegen, wobei die Filterregeln den mittels der Beobachtung beobachteten Kommunikationsverkehr für die jeweilige App als zulässig festlegen. Auf diese Weise kann in einer als zuverlässig und sicher festgestellten Umgebung, d. h. gewissermaßen innerhalb einer Testumgebung, festgestellt werden, welche Kriterien des Kommunikationsverkehrs herangezogen werden können, um einen als zulässig geltenden Kommunikationsverkehr mittels der Filterregeln festzustellen. So können die Filterregeln anhand eines Kommunikationsverkehrs innerhalb einer Testumgebung lernen, welcher Kommunikationsverkehr für die Filterregeln als unkritisch zu gelten hat. Besonders bevorzugt kann maschinelles Lernen herangezogen werden, um die Filterregeln festzulegen. Vorzugsweise sind die Filterregeln mit einem neuronalen Netz implementiert.

Vorzugsweise ist bei dem erfindungsgemäßen Automatisierungssystem die Komponente eine Steuereinrichtung des Automatisierungssystems. Insbesondere Steuereinrichtungen von Automatisierungssystemen sind besonders betriebskritische Einrichtungen, welche im Falle eines Angriffs oder infolge einer Fehlfunktion gravierende Auswirkungen auf das Automatisierungssystem selbst oder auf mittels des Automatisierungssystems ausgeführte Prozesse haben können. Folglich ist in dieser Weiterbildung der Erfindung die Informationssicherheit besonders stark verbessert.

Die erfindungsgemäße Fertigungsanlage weist ein Automatisierungssystem gemäß der Erfindung wie vorhergehend beschrieben auf. Gerade im Fertigungsbereich ist die Informationssicherheit von Automatisierungssystemen besonders betriebskritisch. Informationssicherheit kann auch als Cyber-Sicherheit bezeichnet werden.

Nachfolgend wird die Erfindung anhand eines in der Zeichnung dargestellten Ausführungsbeispiels näher erläutert.

Die einzige Zeichnungsfigur 1 zeigt ein erfindungsgemäßes Automatisierungssystem mit einem Steuergerät mit einer Applikation bei der Durchführung eines erfindungsgemäßen Verfahrens zur Filterung des Datenverkehrs der Applikation schematisch in einer Prinzipskizze.

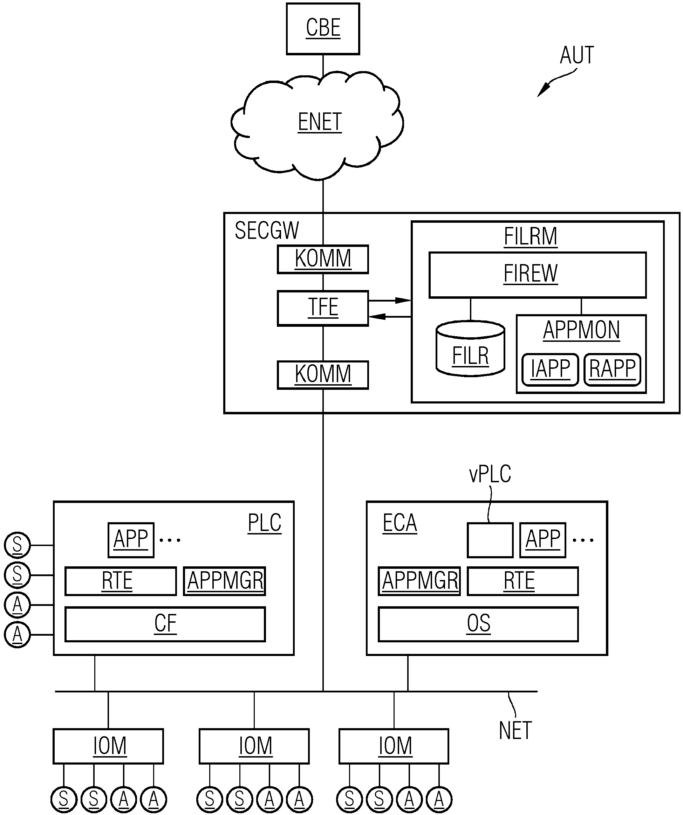

Das in Fig. 1 dargestellte Automatisierungssystem AUT ist ein Automatisierungssystem zur automatisierten Fertigung. In weiteren, nicht eigens dargestellten Ausführungsbeispielen kann das Automatisierungssystem AUT auch ein sonstiges Automatisierungssystem sein, beispielsweise ein Prozessleitsystem einer Biotechnologieanlage. Das Automatisierungssystem AUT umfasst ein Netzwerk NET mit zwei Steuergeräten PLC, vPLC, von welchen ein erstes Steuergerät PLC als physikalisches Gerät realisiert ist, wobei das zweite Steuergerät vPLC als virtuelles Steuergerät auf einer Edge-Cloud-Ausführungsumgebung ECA realisiert ist.

Das Netzwerk NET des Automatisierungssystems AUT ist über ein Sicherheits-Gateway SECGW mit einem Cloud-Backend CBE verbunden. Sensoren S und Aktoren A können direkt mit dem ersten Steuergerät PLC verbunden sein oder mittels Eingabe-und-Ausgabe-Einheiten IOM miteinander kommunizieren.

In der dargestellten Variante können sowohl auf dem ersten Steuergerät PLC als auch auf der Edge-Cloud-Ausführungsumgebung ECA Applikationen, im Folgenden kurz als Apps APP bezeichnet, installiert sein, die von einer App-Ausführungsumgebung RTE, einem Runtime-Environment, ausgeführt werden. Die Applikationen sind mittels eines Containers oder mittels einer virtuellen Maschine gebildet. Eine App kann insbesondere eine Diagnose-Funktionalität und/oder eine Überwachungs-Funktionalität und/oder eine SteuerungsFunktionalität und/oder eine Optimierungs-Funktionalität zur Anpassung von Prozessparametern realisieren.

Im Automatisierungssystem AUT ist ein App-Manager APPMGR vorhanden, welcher ausgebildet ist, Apps APP zu installieren und zu aktualisieren und zu starten und anzuhalten und zu beenden und zu deinstallieren. Das erste Steuergerät PLC umfasst zudem ein eine Firmware CF und das zweite Steuergerät vPLC umfasst zudem ein Betriebssystem OS. Das erste Steuergerät PLC und das zweite Steuergerät vPLC weisen jeweils eine Steuerungsfunktionalität auf, welche eingerichtet ist, Sensormesswerte der Sensoren S zu erfassen und abhängig von den Sensormesswerten Steueraktionen zu ermitteln und mittels der Steueraktionen Aktuatoren A anzusteuern.

Bei dem Automatisierungssystem AUT ist das Sicherheits-Gateway SECGW eingerichtet, eine Datenkommunikation zwischen den Netzwerk NET des Automatisierungssystems AUT und einem externen Netzwerk ENET, beispielsweise das Internet, zu beschränken. An die Stelle des Internets kann in weiteren, nicht eigens dargestellten Ausführungsbeispielen auch ein sonstiges externes Netzwerk ENET, beispielsweise ein Firmennetzwerk oder ein Fabriknetzwerk oder ein Office-Netzwerk treten. Die Beschränkung der Datenkommunikation zwischen Netzwerk NET des Automatisierungssystems und dem externen Netzwerk ENET durch das Sicherheits-Gateway SECGW erfolgt derart, dass nur gemäß einer Filter-Policy zulässiger Datenverkehr tatsächlich erfolgen kann. Ein Datenverkehr, der gemäß der Filter-Policy nicht zulässig ist, kann durch das Sicherheits-Gateway SECGW blockiert werden. Ein Datenverkehr, der gemäß der Filter-Policy zulässig ist, kann durch das Sicherheits-Gateway SECGW weitergeleitet werden.

Die einzelnen Apps APP des ersten PLC und des zweiten Steuergeräts vPLC stellen unterschiedliche Funktionalitäten bereit: Manche Funktionalitäten, etwa eine Steuerungsfunktionalität, können folgenreicher sein als andere Funktionalitäten, etwa Diagnosefunktionalitäten oder Wartungsprognosen für eine vorausschauende Wartung. Daher können Apps APP in einer isolierten Ausführungsumgebung auf einem Gerät ausgeführt werden, das die Berechtigungen einer App begrenzt. Das Durchsetzen von solchen App-Berechtigungen erfolgt dabei herkömmlich durch die App-Ausführungsumgebung RTE.

Allerdings kann auch eine App-Ausführungsumgebung Schwachstellen aufweisen, sodass eine bösartige oder manipulierte App APP ausbrechen kann und nicht vorgesehene Aktionen durchführen kann. Dies kann eine Betriebssicherheit und ein Datenschutz des Automatisierungssystems AUT gravierend beeinträchtigen: So können etwa Geschäftsgeheimnisse an externe Systeme kommuniziert werden oder es kann eine Kommunikation mit einem Command-and-Control-Server erfolgen, was das Durchführen von aktiven Angriffen aus der Ferne zu steuern ermöglicht. Solche Angriffe können auch durch eine herkömmliche Firewall nur begrenzt verhindert werden, da anhand des Netzwerk-Verkehrs allein nicht unterschieden werden kann, von welcher App APP die Kommunikation ausgeht.

Bei dem erfindungsgemäßen Automatisierungssystem AUT ist daher das Sicherheits-Gateway SECGW ausgebildet, eine Information zu den auf erstem Steuergerät PLC und zweitem Steuergerät vPLC des Automatisierungssystems AUT installierten bzw. aktuell ausgeführten Apps APP zu ermitteln. Diese Information wird beispielsweise über OPC UA übermittelt. Es können jedoch alternativ oder zusätzlich auch andere Protokolle wie HTTP, CoAP, XMPP, MQTT o.ä. verwendet werden. Das Sicherheitsgateway SECGW weist zur Durchsetzung der Filter Policy einen Kommunikationsverkehrsfilter TFE auf, der einerseits den Kommunikationsverkehr KOMM zwischen dem Netzwerk NET des Automatisierungssystems AUT mit dem externen Netzwerk ENET zur Erkennung der gerade kommunizierenden Apps APP beobachtet. Eine App APP kann durch einen Bezeichner der App APP, beispielsweise ihren Namen, durch einen kryptographischen Hash-Wert der App APP oder durch ihre digitale Signatur, beispielsweise durch eine digitale Signatur der App-Installationsdatei der App APP oder durch ein für die Verifikation der digitalen Signatur verwendetes digitales Zertifikat, eindeutig erkannt werden. Diese für das Erkennen der App relevanten Informationen bilden die vom Kommunikationsverkehrsfilter TFE zur Filterung herangezogene Information.

Das Sicherheits-Gateway SECGW weist eine Datenbank FILR auf, welche die Art von zulässigem Netzwerkverkehr durch die jeweilige App APP der jeweiligen App APP zuordnet. Die vorgenannte Datenbank FILR, welche den zulässigen Netzwerkverkehr der jeweiligen App APP zuordnet, bildet einen Satz von Filterregeln für die auf dem Automatisierungssystem AUT laufenden Apps APP. Die Art des Netzwerkverkehrs kann durch das Protokoll des Netzwerkverkehrs oder durch Netzwerkadressen von Backend-Systemen charakterisiert sein. Dynamisch von der App-Ausführungsumgebung RTE oder dem Betriebssystem OS oder der Firmware CF zugeordnete weitere Netzwerk-Parameter, beispielsweise eine MAC-Adresse oder eine IP-Adresse oder eine Port-Nummer auf der jeweiligen Komponente, auf der die App ausgeführt wird, können dynamisch mittels eines Protokolls des Netzwerkverkehrs abgefragt werden, beispielsweise mittels OPC UA und/oder http und/oder CoAP oder mittels eines Publish-Subscribe-Protokolls, beispielsweise MQTT und/oder XMPP, bereitgestellt werden. Die Datenbank FILR ist in einem Filterregelmodul FILRM implementiert, welches zugleich die vom Kommunikationsverkehrsfilter TFE gelieferten Informationen auswertet und in einem App-Beobachtungsmodul APPMON die aktuell installierten Apps IAPP und die aktuell laufenden Apps RAPP buchhält. Das Filterregelmodul FILRM nutzt die Datenbank FILR sowie die Information über die installierten IAPP und laufenden Apps RAPP des App-Beobachtungsmoduls APPMON und leitet daraus Firewall-Regeln FIREW ab, die dem Kommunikationsverkehrsfilter TFE zugeleitet werden, welches als zweite Funktionalität die Firewall-Funktionalität entsprechend den Firewall-Regeln FIREW auf den Kommunikationsverkehr KOMM anwendet. Der Kommunikationsverkehrsfilter TFE blockiert also den kommunikationsverkehr KOMM bestimmter Apps APP und lässt den Kommunikationsverkehr KOMM anderer Apps APP passieren.

Abhängig von der ermittelten Information werden die Filterregeln der Datenbank FILR des Sicherheits-Gateways SECGW angepasst. Dadurch kann eine engmaschige Filterung der Datenkommunikation von Apps APP erreicht werden, sodass nur Netzwerkverkehr erlaubt wird, der tatsächlich entsprechend den aktuell installierten oder aktuell ausgeführten Apps APP als zulässig gilt. Selbst wenn die App-Ausführungsumgebung RTE eine Schwachstelle aufweisen sollte, oder wenn bewusst Apps APP mit weitreichenden Fähigkeiten ausgeführt werden, kann erfindungsgemäß engmaschig kontrolliert werden, welche Apps APP mit welchen externen Netzwerken ENET kommunizieren können. In einem weiteren Ausführungsbeispiel, welches nicht ausdrücklich gezeigt ist, kann das Sicherheits-Gateway SECGW sich als Proxy in die verschlüsselte Kommunikation einer spezifischen App APP einschalten, um weiterführende Überprüfungen des Datenverkehrs, etwa eine Deep Packet Inspection DPI, durchzuführen. Hierbei muss das genutzte Sicherheitsprotokoll, beispielsweise TLS, auf dem Security Gateway SECGW terminiert werden.

Die Erfindung wurde beispielhaft für ein einzelnes Sicherheits-Gateway SECGW zwischen einem Automatisierungsnetzwerk AUT und einem externen Netzwerk ENET beschrieben. Es können jedoch allgemein mehrere solche Sicherheits-Gateways SECGW vorgesehen sein, insbesondere innerhalb des verteilten Automatisierungssystems AUT, um einzelne Funktionsbereiche, d. h. Netzwerk-Zonen, innerhalb des Netzwerks NET des Automatisierungssystems voneinander zu separieren. Ebenso kann z.B. im Cloud-Backend CBE ein erfindungsgemäßes Sicherheits-Gateway SECGW vorgesehen sein.

Das Sicherheits-Gateway SECGW kann als Security-Appliance, ein Hardware-Gerät, realisiert sein, jedoch ebenso als virtualisierte Netzwerkfunktion, etwa realisiert mittels einer virtuellen Maschine oder mittels eines Containers.

## Patentansprüche

1. Automatisierungssystem mit mindestens einer Komponente (PLC, vPLC) mit mindestens einer App (APP), welche jeweils eine mittels eines Containers (ECA) oder mittels einer virtuellen Maschine lauffähige Anwendung bildet, und mit mindestens einem sicheren Gateway, wobei die App (APP) jeweils über das sichere Gateways (SECGW) mit einem externen Gerät oder Netzwerk (ENET) kommunikationsverbindbar oder kommunikationsverbunden ist, und wobei das sichere Gateway (SECGW) eingerichtet ist, Filterregeln (FILR) für den Kommunikationsverkehr (KOMM) der jeweiligen App (APP) vorzuhalten und anhand der Filterregeln (FILR) für die jeweilige App (APP) den Kommunikationsverkehr (KOMM) der jeweiligen App (APP) zu filtern.

2. Automatisierungssystem nach dem vorhergehenden Anspruch, welches ein Automatisierungsnetzwerk (NET) bildet, wobei die Komponente (PLC, vPLC) eine Netzwerkkomponente des Automatisierungsnetzwerks (NET) bildet.

3. Automatisierungssystem nach einem der vorhergehenden Ansprüche, welches ein App-Management-Modul (FILRM) aufweist, welches eingerichtet ist, die Filterregeln (FILR) festzulegen.

4. Automatisierungssystem nach dem vorhergehenden Anspruch, bei welchem das App-Management-Modul (FILRM) eingerichtet ist, die Filterregeln (FILR) für die jeweilige App (APP) anhand einer Information der jeweiligen App (APP), insbesondere anhand einer Metainformation der App (APP), festzulegen.

5. Automatisierungssystem nach einem der vorhergehenden Ansprüche, bei welchem das App-Management-Modul (FILRM) eingerichtet ist, die Filterregeln (FILR) für die jeweilige App (APP) anhand einer Adresse der App (APP) und/oder der Komponente, welche die App (APP) aufweist, insbesondere einer Mac-Adresse und/oder anhand einer IP-Adresse, festzulegen.

6. Automatisierungssystem nach einem der vorhergehenden Ansprüche, bei welchem das App-Management-Modul (FILRM) eingerichtet ist, die Filterregel (FILR) anhand eines digitalen Authentisierungs-Zertifikats der App und/oder anhand eines von der App (APP) verwendeten Protokolls und/oder anhand eines der App (APP) zugeordneten Namens festzulegen.

7. Automatisierungssystem nach einem der vorhergehenden Ansprüche, bei welchem das App-Management-Modul (FILRM) eingerichtet ist, die Filterregeln (FILR) anhand einer Information der jeweiligen App (APP), insbesondere anhand einer Header-Information eines IP-Pakets des Kommunikationsverkehrs (KOMM) der App (APP), festzulegen.

8. Automatisierungssystem nach einem der vorhergehenden Ansprüche, bei welchem das App-Management-Modul (FILRM) eingerichtet ist, die Filterregeln (FILR) mittels einer Beobachtung des Kommunikationsverkehrs (KOMM) von bereits als zuverlässig erkannten Apps (APP) festzulegen, wobei die Filterregeln (FILR) den mittels der Beobachtung beobachteten Kommunikationsverkehr (KOMM) als zulässig festlegen.

9. Automatisierungssystem nach einem der vorhergehenden Ansprüche, bei welchem die Komponente (PLC, vPLC) eine Steuereinrichtung des Automatisierungssystems (AUT) ist.

10. Fertigungsanlage, aufweisend ein Automatisierungssystem (AUT) nach einem der vorhergehenden Ansprüche.
